# EUROPÄISCHE PATENTSCHRIFT

(11) **EP 1 150 416 B1**
(45) Veröffentlichungstag und Bekanntmachung des Hinweises auf die Patenterteilung: **22.08.2007**
(21) Anmeldenummer: 00105702.5
(22) Anmeldetag: 17.03.2000
(51) Int. Cl.: H02K 41/03

(54) **Elektrodynamischer Lineardirektantrieb**
Electrodynamic direct drive of a linear motor
Entrainement direct electrodynamique d'un moteur linéaire

(43) Veröffentlichungstag der Anmeldung: 31.10.2001
(73) Patentinhaber: Festo AG & Co., 73734 Esslingen (DE)
(72) Erfinder: Hartramph, Ralf, 73095 Albershausen (DE)
(74) Vertreter: Vetter, Hans

(56) Entgegenhaltungen:
- DE-A- 19 748 647
- US-A- 4 220 899
- US-A- 4 528 466
- US-A- 5 808 381

## Beschreibung

Die Erfindung betrifft einen elektrodynamischen Lineardirektantrieb nach dem Oberbegriff des Anspruchs 1.

Bei einem derartigen, aus der DE 19748647 A1 bekannten Lineardirektantrieb sind die Spulen an der Innenseite eines ferromagnetischen Rohrs angeordnet, während die Permanentmagnete innerhalb des Antriebsspulensystems bewegbar sind. Vor allem bei langgestreckten Anordnungen führt dies zu nicht unerheblichen Lagerproblemen der innerhalb der Spulen bewegbaren Permanentmagnete, und ein Kraftübertragungselement muss an den Magneten fixiert werden. Dieser Linearantrieb besitzt zwar eine Einrichtung zur integrierten Wegsignalerzeugung, jedoch hat sich diese bekannte Art der Wegmessung für die Praxis als zu ungenau erwiesen.

Aus der US-A-4528466, der US-A-4220899 und der US-A-5808381 sind elektrodynamische Lineardirektantriebe mit einem aus mehreren nebeneinander an einem ferromagnetischen langgestreckten Kern aufgereihten Spulen bestehenden Antriebsspulensystem bekannt, das von einer getakteten Erregerspannung beaufschlagbar ist, jedoch weisen die bekannten Lineardirektantriebe keine Wegmesseinrichtung auf.

Die Aufgabe der vorliegenden Erfindung besteht somit darin, einen elektrodynamischen Linearantrieb mit integriertem Wegmesssystem hoher Genauigkeit zu schaffen.

Diese Aufgabe wird erfindungsgemäß mit den Merkmalen des Anspruchs 1 gelöst.

Zur Bestimmung der Läuferposition ist im Gehäuse ein Wegmesssystem integriert, wobei in vorteilhafter Weise das Antriebsspulensystem als Wegmesssystem ausgebildet ist. Hierdurch kann dieses Wegmesssystem für nahezu alle Arten von Lineardirektantrieben in gleicher Weise und mit großer Genauigkeit eingesetzt werden, also nicht nur für Lineardirektantriebe gemäß dem nachfolgend beschriebenen Ausführungsbeispiel, sondern auch z.B. für Lineardirektantriebe, bei denen eine Permanentmagnetanordnung relativ zum Antriebsspulensystem verschiebbar ist und das Antriebsspulensystem aus an einem ferromagnetischen Kern aufgereihten Spulen besteht.

Durch die in den Unteransprüchen aufgeführten Maßnahmen sind vorteilhafte Weiterbildungen und Verbesserungen des im Anspruch 1 angegebenen Lineardirektantriebs möglich

Das das Antriebsspulensystem umgreifende und haltende ferromagnetische Rohr hat eine Mehrfachfunktion und dient zum einen als Führungselement für den Läufer und zum anderen als magnetisches Rückschlussglied zur magnetischen Feldführung.

Ein solches ferromagnetisches Rohr kann leicht an der Außenseite durch Längsführungslager längsverschiebbar sicher und exakt geführt werden, während das Antriebsspulensystem im Inneren des Rohrs bzw. der Permanentmagnete ortsfest fixiert werden kann.

Das Rohr ist in vorteilhafter Weise in einem Längskanal eines Gehäuses verschiebbar gelagert, wobei das Antriebsspulensystem in diesen Längskanal von einer Seite her hineinragt. Hierdurch sind Lineardirektantriebe mit sehr geringen Gehäusequerschnitten und großer Längserstreckung realisierbar.

Um die zentrische Position des Antriebsspulensystems im ferromagnetischen Rohr bei relativ kleinen Abständen zu den Permanentmagneten realisieren zu können, erstreckt sich ein nicht-ferromagnetisches Führungsrohr entlang der radialen Innenflächen der Permanentmagnete, wobei zusätzlich am langgestreckten Kern wenigstens ein Abstützelement angeordnet ist, das entlang der Innenfläche des Führungsrohrs gleitet oder abrollt.

Die radial magnetisierten Permanentmagnete umgreifen das Antriebsspulensystem und sind insbesondere aus radial oder diametral magnetisierten Segmentmagneten oder Magnetschalen aufgebaut.

Das Führungsrohr und die Permanentmagnete können einen runden, ovalähnlichen oder prismatischen Querschnitt besitzen, wobei alle nicht-runden Querschnitte gleichzeitig eine Verdrehsicherheit gewährleisten.

Eine besonders kompakte und leicht handhabbare Anordnung wird dadurch erreicht, dass im Gehäuse eine Regel- und/oder Steuer- und/oder Leistungselektronik zur elektrischen Beaufschlagung des Antriebsspulensystems und/oder eine elektrisch betätigbare Feststelleinrichtung für den Läufer integriert ist.

Das zylindrisch gewickelte Antriebsspulensystem kann ein- oder mehrsträngig ausgebildet sein, wobei bei mehreren Spulensträngen diese in ihrem Wickelsinn jeweils alternierend in axialer Richtung auf dem Kern aufgebracht sind. Die Spulenbreite einer Spule entspricht dabei der Breite eines Permanentmagneten geteilt durch die Spulenstrangzahl.

Bei einem mehrsträngigen Antriebsspulensystem ist zweckmäßigerweise eine elektronische oder mechanische Kommutierung der Spulenstränge entsprechend ihrer jeweiligen Lage zu den Permanentmagneten des Läufers vorgesehen.

Ausführungsbeispiele der Erfindung sind in der Zeichnung dargestellt und in der nachfolgenden Beschreibung näher erläutert. Es zeigen:
- Figur 1: eine schematische schnittartige Gesamtdarstellung eines elektrodynamischen Lineardirektantriebs als Ausführungsbeispiel der Erfindung,
- Figur 2: eine ähnliche Anordnung in einer Teildarstellung, bei der die axiale Länge des Antriebsspulensystems die der Permanentmagnetanordnung übersteigt,
- Figur 3: eine Darstellung zur Erläuterung der Verschaltung der Teilspulen des Antriebsspulensystems,
- Figur 4: eine an sich bekannte Auswerteschaltung für ein als Differentialdrosselsystem ausgebildetes Wegmesssystem und
- Figur 5: ein Signaldiagramm zur Erläuterung der Wirkungsweise.

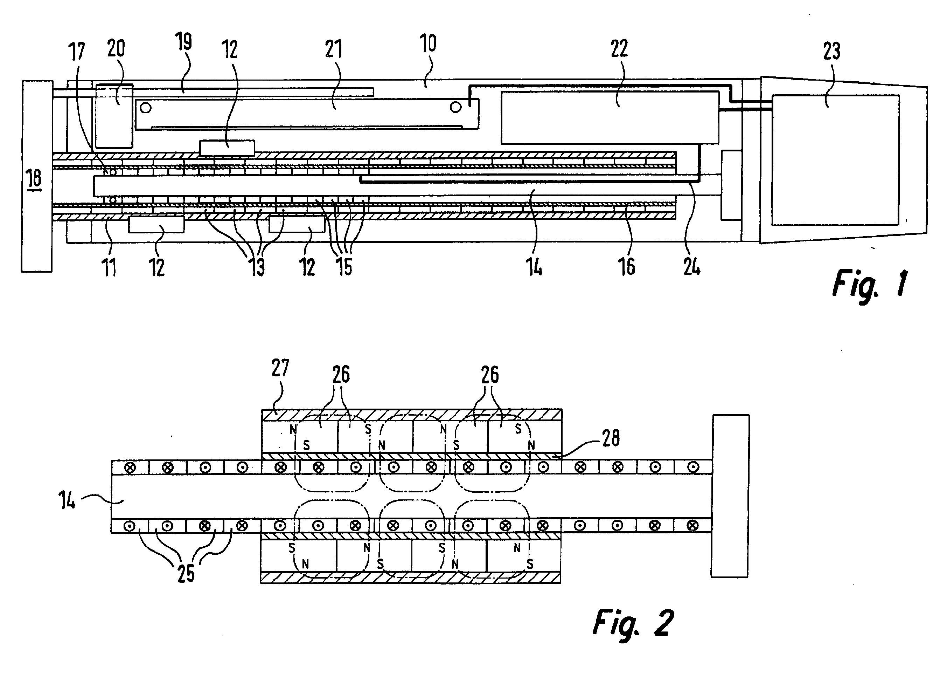

Bei dem in Figur 1 dargestellten Ausführungsbeispiel eines elektrodynamischen Lineardirektantriebs enthält ein Gehäuse 10 eine Sackbohrung, in der ein ferromagnetisches Rohr 11 mittels Lagerkassetten 12 längsverschiebbar geführt ist. Die Lagerkassetten 12 greifen an der Außenfläche des Rohrs 11 an und sind als Gleit- oder Rollenlageranordnungen ausgebildet. Sie greifen in nicht näher dargestellte Längsnuten des ferromagnetischen Rohrs 11 ein, um eine Verdrehsicherheit zu erzielen. Alternativ hierzu könnte das ferromagnetische Rohr 11 anstelle eines runden Querschnittes auch einen ovalähnlichen oder prismatischen Querschnitt aufweisen, der von sich aus bereits eine Verdrehsicherheit gewährleistet.

In dem als Führungsrohr ausgebildeten Rohr 11 sind radial oder diametral magnetisierte, aus diametral oder radial magnetisierten Segmentmagneten bzw. Magnetschalen aufgebaute Permanentmagnetringe, im folgenden als Magnete 13 bezeichnet, so angeordnet und an der Innenfläche des Rohrs 11 fixiert, daß in axialer Richtung eine alternierende Feldfolge mit radialer Feldausrichtung entsteht. Das beispielsweise als Stahlrohr ausgebildete Rohr 11 stellt den Läufer des Lineardirektantriebs dar und dient zur Aufnahme der Magnete 13, als magnetischer Rückschluß zur magnetischen Feldführung und als Führungsrohr.

Der innerhalb des Läufers angeordnete Stator besteht im wesentlichen aus einem ferromagnetischen Kern 14, der als Stahl- oder Eisenkern in Form von Rundmaterial oder Rundrohr ausgebildet sein kann, auf dem ein zylindrisch gewickeltes Antriebsspulensystem 15 aufgebracht ist. Der mit dem Antriebsspulensystem 15 versehene Kern 14 ist dabei an einem Ende an der Innenseite des Gehäuses 10 fixiert und ragt in die Sackbohrung bzw. das ferromagnetische Rohr 11 von der Innenseite des Gehäuses 10 aus hinein. Die Innenseite der Magnete 13 ist mit einem nicht-magnetischen, dünnwandigen Rohr 16 versehen bzw. verkleidet, dessen Innenfläche als Gleitfläche für ein Abstützelement 17 dient, das am freien Ende des Kerns 14 montiert ist und selbst als Gleit- oder Rollenlager ausgebildet ist. Mittels dieses Abstützelements 17 werden der Kern 14 und das Antriebsspulensystem 15 sicher innerhalb der Magnete 13 bei möglichen kleinen Spalten geführt.

Falls das ferromagnetische Rohr 11 einen nicht-runden Querschnitt besitzt, so sind die darin enthaltenen Komponenten selbstverständlich entsprechend geformt.

Das aus dem Gehäuse 10 herausragende Ende des Läufers bzw. Rohrs 11 ist stirnseitig über ein Verbindungselement 18 mit einer Stange 19 verbunden, die parallel zum Rohr 11 in eine Bohrung des Gehäuses 10 hineinragt und in dieser geführt ist. Diese Stange 19 verläuft durch eine Feststelleinrichtung 20, mit deren Hilfe die jeweilige Position des Läufers beispielsweise elektrisch fixiert werden kann. Derartige Feststelleinrichtungen 20 sind in vielen Variationen bekannt, so daß eine nähere Beschreibung entfallen kann. Weiterhin bildet diese Stange 19 und/oder das Rohr 11 direkt in Verbindung mit einer parallel dazu verlaufenden Sensoreinrichtung 21 ein Wegmeßsystem zur Erfassung der jeweiligen Position des Läufers. Wie später noch näher erläutert wird, können die Sensoreinrichtung 21 und das entsprechende Wegmeßsystem auch entfallen, indem das Antriebsspulensystem 15 als Differentialdrosselsystem geschaltet zusätzlich als Wegmeßsystem dient.

Im Gehäuse 10 sind weiterhin eine Leistungselektronik 22 und eine Steuer- und/oder Regelelektronik 23 integriert. Die elektrischen Komponenten sind dabei mittels Leitungen untereinander verbunden, wobei insbesondere das Antriebsspulensystem 15 mittels einer Leitung 24 mit der Leistungselektronik 22 verbunden ist.

Das Antriebsspulensystem 15 kann ein- oder mehrsträngig aufgebaut sein, wobei die entsprechenden Spulenstränge in ihrem Wickelsinn jeweils alternierend in axialer Richtung aufgebracht sind. Die Spulenbreite muß in Abhängigkeit der Breite der verwendeten Magnete 13 in der Teilung der Spulenstranganzahl ausgelegt werden. Dies bedeutet, daß bei dem im Ausführungsbeispiel dargestellten zweisträngigen Antriebsspulensystem 15 die Spulenbreite einer Teilspule der halben Breite eines Magneten 13 entspricht. Bei der Verwendung von mehrsträngigen Spulensystemen ist eine Kommutierung der Spulenstränge entsprechend ihrer Lage zu den Magneten 13 des Läufers notwendig. Eine solche an sich bekannte Kommutierung ist nicht näher dargestellt und kann elektronisch oder mechanisch erfolgen.

Die Länge des Antriebsspulensystems 15 im Verhältnis zur Länge des permanentmagnetisch erregten Läufers ist vom Verwendungszweck abhängig. Gemäß Fig. 1 ist das Antriebsspulensystem 15 kürzer als die Gesamtzahl der Magnete 13 der Permantentmagnetanordnung. Hierdurch wird das Antriebsspulensystem optimal ausgenutzt, und ein Teil des permanentmagnetischen Läufers wird temporär nicht genutzt. Durch die optimale Ausnutzung des Antriebsspulensystems wird ein günstigerer Wirkungsgrad erreicht, allerdings steigt dabei die Masse des Läufers.

In Fig. 2 ist in einer vergrößerten Teildarstellung lediglich eines Stators und eines Läufers der andere Fall dargestellt, das heißt, das dort dargestellte Antriebsspulensystem 25 ist länger als die aus vier Magneten 26 bestehende Permanentmagnetanordnung, also länger als der entsprechende Läufer. Entsprechend verkürzt sich ein die Magnete 26 aufnehmendes ferromagnetisches Rohr 27 und ein inneres nicht-magnetisches, dünnwandiges Rohr 28. Bei dieser Anordnung läßt sich das Magnetvolumen bestmöglich ausnutzen, wobei dann die teilweise ungenutzten Spulenbereiche unnötige Wärme erzeugen. Dagegen wird die Läufermasse bei einer solchen Anordnung reduziert, was die dynamischen Eigenschaften verbessert. In Fig. 2 sind die magnetischen Feldlinien schematisch durch strichpunktierte Linien und der Wicklungssinn der Teilspulen des Antriebsspulensystems 15 durch übliche Symbole gekennzeichnet.

Als Versorgung des in Fig. 1 dargestellten elektrodynamischen Lineardirektantriebs werden lediglich eine nicht dargestellte Stromversorgungsverbindung und eine Steuerverbindung zu einer externen Zentrale benötigt, zum Beispiel ein Feldbus oder Binärbus. Alle Initialisierungs- und Regelvorgänge werden von der integrierten Elektronik übernommen, was die Einheit sehr leicht handhabbar macht und den Verdrahtungsaufwand minimiert.

Die Funktionsweise der integrierten Wegmessung beruht nicht wie bei dem eingangs angegebenen Stand der Technik auf der Messung von beweglichen hochpermeablen Kernen in Differentialdrosselsystemen, sondern auf der Vermessung von durch Sättigungserscheinungen im Kern hervorgerufenen Induktivitätsänderungen, welche durch die Bewegung des infolge der Magnete 13 permanentmagnetischen Läufers verschoben werden und so zu Induktivitätsänderungen über dem Weg führen, die dann beispielsweise durch das aus dem eingangs angegebenen Stand der Technik bekannte Verfahren erfaßt werden können.

In Fig. 2 ist der prinzipielle Feldverlauf des Linearantriebs mit allen wichtigen Komponenten dargestellt. Auf Grund der Feldführung durch den Kern 14 ergeben sich unterschiedlich starke Induktionsverläufe. Diese lassen sich in Bereiche mit schwacher Induktion, das heißt auch schwacher magnetischer Sättigung im Eisen, und Bereiche mit starker Induktion, das heißt starker magnetischer Sättigung im Eisen, unterteilen. Aus dem Zusammenhang der Induktion mit der bekannten BH-Magnetisierungslinie des verwendeten Eisenwerkstoffes (B = Induktion; H = Feldstärke), die sich auch in einer µB-Kennlinie darstellen läßt, ergibt sich ein bestimmter Permeabilitätsverlauf (µ) im Eisenkern in axialer Richtung.

Dieser Permeabilitätsverlauf ist verknüpft mit den Permanentmagneten des Läufers und damit auch mit der Läuferposition. Elektrisch läßt sich diesere Permeabilitätsverlauf für die Positionserfassung über die Spuleninduktivität des Antriebsspulensystems 25 nutzen. Die Spuleninduktivität ist vom magnetischen Widerstand und der Windungszahl abhängig. Der magnetische Widerstand wiederum ist neben dem Materialvolumen oder der Fläche und der magnetischen Länge der Feldsegmente (beim Ausführungsbeispiel konstant) von der Permeabilität abhängig.

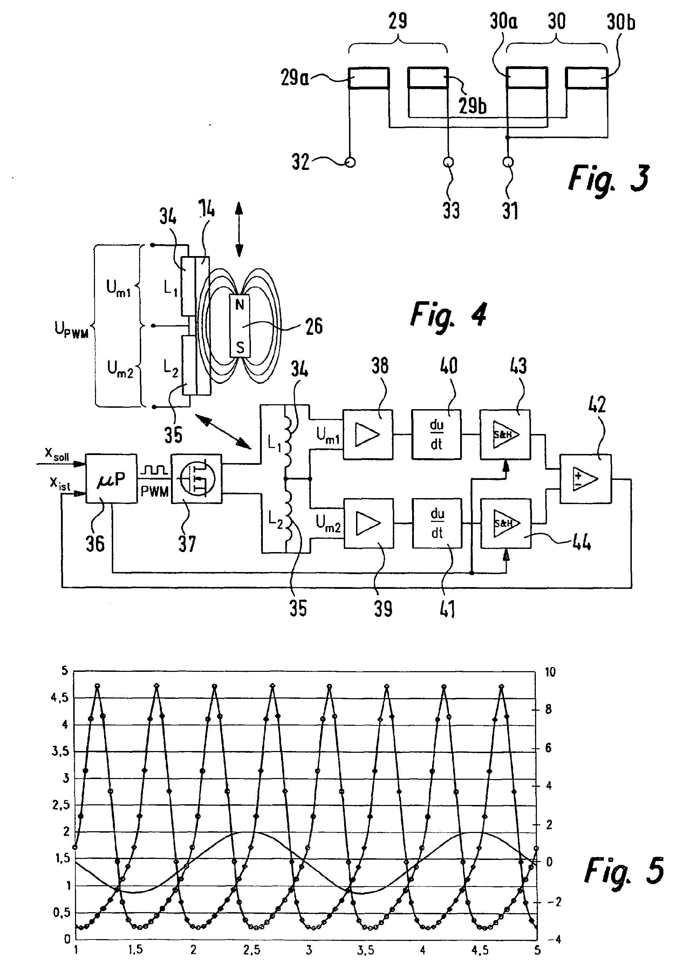

Um das Prinzip der integrierten Wegmessung nun nutzen zu können, muß das Antriebsspulensystem 25 bzw. 15 so gestaltet werden, daß ein Differentialdrosselsystem entsteht. Dies ist in Fig. 3 anhand von zwei Teilspulen 29, 30 des beim Ausführungsbeispiel verwendeten Antriebsspulensystems 25 bzw. 15 erläutert. Bei diesem zweisträngigen Spulensystem, bei dem in axialer Richtung jede zweite Teilspule 29, 30 in Serie geschaltet einen Strang ergibt, werden diese Teilspulen 29, 30 nochmals in Spulenbereiche 29a bzw. 29b und 30a bzw. 30b unterteilt und so gewickelt, daß sich ein zweigeteilter Strang ergibt, in dem jeder erste Teilbereich 29a einer Teilspule 29 mit jedem weiteren ersten Spulenbereich 30a einer Teilspule 30 desselben Stranges in Serie zu einem Halbstrang (dem Hinstrang) geschaltet ist und jeder zweite Spulenbereich 29b, 30b der Teilspule 29,30 ebenfalls in Serie zu einem zweiten Halbstrang (dem Rückstrang) verschaltet sind. Die Verbindungsstelle zwischen Hin- und Rückstrang wird als Mittelanzapfung 31 zwischen den Endanschlüssen 32, 33 ebenfalls herausgeführt.

Mit jedem weiteren Strang wird in seiner Verschaltung ebenso verfahren. Da nun der wechselnde Permeabilitätsverlauf in den jeweiligen Spulen eines Halbstranges geometrisch versetzt bei Bewegung des Läufers durchfahren wird, ergeben sich in den jeweiligen Teilsträngen, die durch die Serienschaltung als jeweils eine Induktivität betrachtet werden können, sinusartige Induktivitätsverläufe, die zueinander entsprechend dem Abstand der Teilspulen versetzt sind. Durch die spezielle Spulenverschaltung der Halbstränge ergibt sich nun ein Differentialdrosselsystem gemäß Fig. 4, das aus den beiden Teilinduktivitäten L₁ und L₂ besteht, bei dem sich nun aber gegenüber dem Stand der Technik kein Kern bewegt. In diesem Differentialdrosselsystem läßt sich nun mittels des in Fig. 4 dargestellten und aus dem eingangs angegebenen Stand der Technik bekannten Induktivitätsmeßverfahrens das Verhältnis der beiden Teilinduktivitäten L₁ und L₂ der Halbstränge eines Vollstranges bestimmen.

Trägt man nun die Induktivitätsverhältnisse beider Vollstränge über dem Weg auf, so ergeben sich die in Fig. 5 ersichtlichen Signalverläufe. Die echte Sinus-Kurve entspricht idealisiert dem Induktionsverlauf im Eisenkern (linke Skala), und die unsymmetrische Kurven entsprechen den berechneten Induktivitätsverhältnissen in den beiden Strängen der Motorwicklungen beim Durchfahren des Läufers, die das zu verarbeitende Wegsignal darstellen (rechte Skala). Diese Kurven sind unsymmetrisch, da die Magnetisierungskennlinien der verwendeten Materialien nichtlinear sind. Die Wegmessung erfolgt nun zum einen durch Auszählen der jeweiligen Perioden und Interpolation der analogen Zwischenwerte, so daß sich ein relativ messendes Wegmeßsystem mit einer absoluten Weginterpolation in den jeweiligen Segmenten ergibt.

Zur Erfassung der Positionswerte aus den Signalverläufen dient die in Fig. 4 dargestellte, an sich bekannte Schaltung. Wie bereits ausgeführt, sind die beiden Halbstränge 34, 35 des Vollstranges des Antriebsspulensystems 25 bzw. 15 in Reihe geschaltet. Die Ansteuerung erfolgt durch eine pulsweitenmodulierte Rechteckspannung U_{PWM}, die in einem als Mikroprozessor ausgebildeten Positions- oder Bahnregler 36 erzeugt und über eine Treiberstufe 37 an die Halbstränge 34, 35 angelegt wird.

Zur Messung der Induktivitätsänderung werden die über den Halbsträngen 34, 35 abfallenden Spannungen Uₘ₁ und Uₘ₂ getrennt über jeweils einen Meßverstärker 38, 39 entkoppelt und im Signalpegel an die nachfolgende elektronische Auswerteschaltung angepaßt. An den Ausgängen der Meßverstärker 38, 39 liegen somit die Abbildungen der Teilspannungen über den Halbsträngen 34, 35 an. Durch eine elektronische Differenzierung in den nachgeschalteten Differenzierungsstufen 40, 41 der Spannungssignale am Ausgang der Meßverstärker 38, 39 jeweils kurz nach dem Umschalten des pulsweitenmodulierten Stellsignals läßt sich das Induktivitätsverhältnis beider Halbstränge 34, 35 getaktet mit der Pulsfrequenz bestimmen. Durch Subtraktion der Steigungswerte der Spannungen beider Halbstränge 34, 35 mittels einer Subtraktionsstufe 42 läßt sich die Genauigkeit der Erfassung des Induktivitätsverhältnisses durch Eliminieren von Gleichspannungsstörungen steigern. Wird die Erfassung des Induktivätsverhältnisses immer zum selben Zeitpunkt nach dem Umschalten des Stellsignals durchgeführt und im Ausführungsbeispiel in einem "Sample-and-Hold"-Glied 43, 44 zwischengespeichert, ergibt sich am Ausgang der Subtraktionsstufe 42 somit ein wegabhängiges, quasi-kontinuierliches Gleichspannungssignal. Dieses Signal ist in weiten Bereichen linear von der Läuferposition abhängig, entspricht also dem jeweiligen Positions-Istwert xᵢₛₜ des Läufers.

Das am Ausgang der Subtraktionsstufe 42 liegende Signal xᵢₛₜ wird nun zur Regelung eingesetzt, indem man dieses Signal mit einem vorgegebenen Positions-Sollwert xₛₒₗₗ koppelt und daraus die Regeldifferenz bildet. Dies erfolgt im Positions- oder Bahnregler 36. Damit kann mittels der beschriebenen Anordnung sowohl die Stellbewegung realisiert als auch ein Wegsignal erzeugt werden.

Das beschriebene integrierte Wegmeßsystem ist nicht nur für elektrodynamische Lineardirektantriebe gemäß den Ausführungsbeispielen einsetzbar, sondern kann auch für andere elektrodynamische Lineardirektantriebe eingesetzt werden, die in der Konstruktion von den Ausführungsbeispielen abweichen.

## Patentansprüche

1. Elektrodynamischer Linearantrieb mit einem aus mehreren, nebeneinander an einem ferromagnetischen Kern (14) aufgereihten Spulen bestehenden Antriebsspulensystem (15; 25), das von einer getakteten Erregerspannung beaufschlagbar ist, und mit einer als Läufer ausgebildeten, aus mehreren, in einer Längsrichtung nebeneinander angeordneten Permanentmagneten (13; 26) bestehenden Permanentmagnetanordnung, die relativ zum Antriebsspulensystem (15; 25) verschiebbar ist, wobei das Antriebsspulensystem (15; 25) auch Bestandteil eines Wegmesssystems für den Läufer ist, **dadurch gekennzeichnet, dass** das Antriebsspulensystem (15; 25) als Differentialdrosselsystem (34, 35) geschaltet ist, indem durch Bereiche mit unterschiedlicher Eisensättigung im Kern (14), bewirkt durch die Permanentmagnete (13; 26) des Läufers, Induktivitätsänderungen hervorgerufen und durch die Bewegung des Läufers entsprechend verschoben werden, und dass eine die Induktivitätsverhältnisse der Teilinduktivitäten (L₁, L₂) des Differentialdrosselsystems (34, 35) erfassende und daraus die Läuferposition bestimmende Auswerteeinrichtung (36 bis 44) vorgesehen ist.

2. Lineardirektantrieb nach Anspruch 1, **dadurch gekennzeichnet, dass** ein das Antriebsspulensystem (15; 25) umgreifendes ferromagnetisches Rohr (11; 27) vorgesehen ist, an dessen Innenseite die Permanentmagnete (13; 26) aufgereiht sind, wobei der mit dem Antriebsspulensystem (15; 25) versehene Kern (14) als Stator und das mit den Permanentmagneten (13; 26) versehene Rohr (11; 27) als Läufer ausgebildet ist.

3. Lineardirektantrieb nach Anspruch 2, **dadurch gekennzeichnet, dass** das Rohr (11; 27) in einem Längskanal eines Gehäuses (10) verschiebbar gelagert ist, wobei das Antriebsspulensystem (15; 25) in diesen Längskanal von einer Seite her hineinragt.

4. Lineardirektantrieb nach einem der vorhergehenden Ansprüche, **dadurch gekennzeichnet, dass** ein sich entlang der radialen Innenflächen der Permanentmagnete (13; 26) erstreckendes, nicht-ferromagnetisches Führungsrohr (16; 28) vorgesehen ist, und dass am langgestreckten Kern (14) wenigstens ein Abstützelement (17) angeordnet ist, das entlang der Innenfläche des Führungsrohrs (16; 28) bei der Bewegung des Läufers gleitet oder abrollt.

5. Lineardirektantrieb nach einem der vorhergehenden Ansprüche, **dadurch gekennzeichnet, dass** die radial magnetisierten Permanentmagnete (13; 26) das Antriebsspulensystem (15; 25) umgreifen und insbesondere aus radial oder diametral magnetisierten Segmentmagneten oder Magnetschalen aufgebaut sind.

6. Lineardirektantrieb nach einem der vorhergehenden Ansprüche, **dadurch gekennzeichnet, dass** das Führungsrohr (16; 28) und die Permanentmagnete (13; 26) einen runden, ovalähnlichen oder prismatischen Querschnitt besitzen.

7. Lineardirektantrieb nach einem der vorhergehenden Ansprüche, **dadurch gekennzeichnet, dass** im Gehäuse (10) eine Regel- und/oder Steuer- und/oder Leistungselektronik (22, 23) zur elektrischen Beaufschlagung des Antriebsspulensystems (15; 25) integriert ist und/oder dass eine elektrisch betätigbare Feststelleinrichtung (20) für den Läufer im Gehäuse (10) angeordnet ist.

8. Lineardirektantrieb nach einem der vorhergehenden Ansprüche, **dadurch gekennzeichnet, dass** das zylindrisch gewickelte Antriebsspulensystem (15; 25) ein- oder mehrsträngig ausgebildet ist, wobei bei mehreren Spulensträngen diese in ihrem Wickelsinn jeweils alternierend in axialer Richtung auf dem Kern aufgebracht sind.

9. Lineardirektantrieb nach Anspruch 8, **dadurch gekennzeichnet, dass** die Spulenbreite einer Spule des Antriebsspulensystems (15; 25) der Breite eines Permanentmagneten (13) geteilt durch die Spulenstrangzahl entspricht.

10. Lineardirektantrieb nach Anspruch 8 oder 9 **dadurch gekennzeichnet, dass** bei einem mehrsträngigen Antriebsspulensystem (15; 25) eine elektronische oder mechanische Kommutierung der Spulenstränge entsprechen ihrer jeweiligen Lage zu den Permanentmagneten (13) des Läufers vorgesehen ist.

## Claims

1. Electrodynamic linear drive with a drive coil system (15; 25) comprising a plurality of coils lined up adjacent to one another on a ferromagnetic core (14), to which a pulsed excitation voltage can be applied, and with a permanent magnet arrangement designed as a rotor and comprising a plurality of permanent magnets (13; 26) arranged adjacent to one another in a longitudinal direction, which is displaceably relative to the drive coil system (15; 25), wherein the drive coil system (15; 25) also forms part of position sensing system for the rotor, **characterised in that** the drive coil system (15; 25) is connected as an inductance bridge system (34, 35) by causing inductance changes by means of regions with varying magnetic saturation in the core (14) introduced by the permanent magnets (13; 26) of the rotor, said inductance changes being shifted by the movement of the rotor, and **in that** an evaluation device (36 to 44) is provided to detect the inductance conditions of the partial inductances (L₁, L₂) of the inductance bridge system (34, 35) and to determine the rotor position therefrom.

2. Direct linear drive according to claim 1, **characterised in that** a ferromagnetic tube (11; 27) encompassing the drive coil system (15; 25) is provided, on the inside of which the permanent magnets (13; 26) are lined up, wherein the core (14) fitted with the drive coil system (15; 25) is designed as a stator and the tube (11; 27) fitted with the permanent magnets (13; 26) is designed as a rotor.

3. Direct linear drive according to claim 2, **characterised in that** the tube (11; 27) is displaceably mounted in a longitudinal passage of a housing (10), the drive coil system (15; 25) projecting into said longitudinal passage from one side.

4. Direct linear drive according to any of the preceding claims, **characterised in that** a non-ferromagnetic guide tube (16; 28) extending along the radial inner surfaces of the permanent magnets (13; 26) is provided, and **in that** at least one support element (17) is located on the oblong core (14) to slide or roll along the inner surface of the guide tube (16; 28) as the rotor moves.

5. Direct linear drive according to any of the preceding claims, **characterised in that** the radially magnetised permanent magnets (13; 26) encompass the drive coil system (15; 25) and are in particular constructed from radially or diametrically magnetised segmental magnets or magnet shells.

6. Direct linear drive according to any of the preceding claims, **characterised in that** the guide tube (16; 28) and the permanent magnets (13; 26) have a circular, oval or prismatic cross-section.

7. Direct linear drive according to any of the preceding claims, **characterised in that** a closed and/or open loop control system and/or a power electronics system (22, 23) for applying power to the drive coil system (15; 25) is integrated into the housing (10) and/or **in that** an electrically operated locking device (20) for the rotor is located in the housing (10).

8. Direct linear drive according to any of the preceding claims, **characterised in that** the cylindrically wound drive coil system (15; 25) is designed single- or multi-stranded, multiple strands being applied to the core with alternating winding direction in the axial direction.

9. Direct linear drive according to claim 8, **characterised in that** the coil width of a coil of the drive coil system (15; 25) is equal to the width of a permanent magnet (13) divided by the number of coil strands.

10. Direct linear drive according to claim 8 or 9, **characterised in that**, in a multi-stranded drive coil system (15; 25), an electronic or mechanical commutation of the coil strands in accordance with their position relative to the permanent magnet (13) of the rotor is provided.

## Revendications

1. Entraînement linéaire électrodynamique comportant un système à bobines d'entraînement (15 ; 25) composé de plusieurs bobines alignées les unes à côté des autres sur un noyau ferromagnétique (14), système qui peut être alimenté par une tension d'excitation de champ synchronisée, et un agencement d'aimants permanents, formant la partie mobile, composé de plusieurs aimants permanents (13 ; 26) disposés les uns à côté des autres dans le sens de la longueur, qui est déplaçable par rapport au système à bobines d'entraînement (15 ; 25), le système à bobines d'entraînement (15 ; 25) faisant également partie intégrante d'un système de mesure du déplacement de la partie mobile, **caractérisé en ce que** le système à bobines d'entraînement (15 ; 25) est monté en tant que système à étranglement différentiel (34, 35) en ceci qu'au moyen des zones comportant une saturation en fer différente dans le noyau (14), induite par les aimants permanents (13 ; 26) de la partie mobile, des modifications de l'inductance sont provoquées et déplacées de façon correspondante par le mouvement de la partie mobile et **en ce qu'**il est prévu une unité d'analyse (36 à 44) enregistrant les conditions d'inductance des inductances partielles (L₁, L₂) du système à étranglement différentiel (34 ; 35) et déterminant à partir de cela la position de la partie mobile.

2. Entraînement direct linéaire selon la revendication 1, **caractérisé en ce qu'**il est prévu un tube ferromagnétique (11 ; 27) entourant le système à bobines d'entraînement (15 ; 25), tube sur la face interne duquel les aimants permanents (13 ; 26) sont alignés, le noyau (14) muni du système à bobines d'entraînement (15 ; 25) étant réalisé sous forme de stator et le tube (11 ; 27) muni des aimants permanents (13 ; 26) formant la partie mobile.

3. Entraînement direct linéaire selon la revendication 2, **caractérisé en ce que** le tube (11 ; 27) est monté de manière mobile dans un canal longitudinal d'un boîtier (10), le système d'entraînement à bobines (15 ; 25) s'enfonçant dans ce canal longitudinal à partir d'un côté.

4. Entraînement direct linéaire selon l'une des revendications précédentes, **caractérisé en ce qu'**il est prévu un tube de guidage non ferromagnétique (16 ; 28) s'étendant le long des surfaces internes radiales des aimants permanents (13 ; 26) et **en ce qu'**est disposé au moins un élément d'appui (17) sur le noyau oblong (14) qui glisse ou roule le long de la surface interne du tube de guidage (16 ; 28) lors du mouvement de la partie mobile.

5. Entraînement direct linéaire selon l'une des revendications précédentes, **caractérisé en ce que** les aimants permanents magnétisés dans le sens radial (13 ; 26) entourent le système à bobines d'entraînement (15 ; 25) et sont constitués en particulier d'aimants en secteur ou de coques aimantées magnétisés dans le sens radial ou diamétral.

6. Entraînement direct linéaire selon l'une des revendications précédentes, **caractérisé en ce que** le tube de guidage (16 ; 28) et les aimants permanents (13 ; 26) possèdent une section transversale ronde, ovoïdales ou prismatique.

7. Entraînement direct linéaire selon l'une des revendications précédentes, **caractérisé en ce qu'**une électronique de réglage et/ou de commande et/ou de puissance (22, 23) pour l'alimentation électrique du système à bobines d'entraînement (15 ; 25) est intégrée dans le boîtier (10) et/ou **en ce qu'**un dispositif de blocage (20) de la partie mobile, pouvant être actionné électriquement, est disposé dans le boîtier (10).

8. Entraînement direct linéaire selon l'une des revendications précédentes, **caractérisé en ce que** le système à bobines d'entraînement (15 ;25) enroulé en cylindre est réalisé avec un ou plusieurs brins, et, dans le cas de brins de bobine multiples, ceux-ci sont appliqués sur le noyau dans leur sens d'enroulement, en alternance dans le sens axial.

9. Entraînement direct linéaire selon la revendication 8, **caractérisé en ce que** la largeur d'une bobine du système à bobines d'entraînement (15; 25) correspond à la largeur d'un aimant permanent (13) divisée par le nombre de brins de bobine.

10. Entraînement direct linéaire selon la revendication 8 ou 9, **caractérisé en ce que**, dans le cas d'un système à bobines d'entraînement à plusieurs brins (15 ; 25), il est prévu une commutation électronique ou mécanique des brins de bobine en fonction de leur emplacement respectif par rapport aux aimants permanents (13) de la partie mobile.
